# EUROPEAN PATENT SPECIFICATION

(11) **EP 4 074 469 B1**
(45) Date of publication and mention of the grant of the patent: **09.07.2025**
(21) Application number: 20896675.4
(22) Date of filing: 22.10.2020
(51) Int. Cl.: G05D 1/00, A01D 34/00, B25J 9/16

(54) **MOBILE ROBOT SYSTEM, AND METHOD FOR GENERATING BOUNDARY INFORMATION OF MOBILE ROBOT SYSTEM**
MOBILES ROBOTERSYSTEM UND VERFAHREN ZUM ERZEUGEN VON GRENZINFORMATIONEN EINES MOBILEN ROBOTERSYSTEMS
SYSTÈME DE ROBOT MOBILE ET PROCÉDÉ DE GÉNÉRATION D'INFORMATIONS DE LIMITE DE SYSTÈME DE ROBOT MOBILE

(30) Priority: 06.12.2019 KR 20190161892
(43) Date of publication of application: 19.10.2022
(73) Proprietor: LG Electronics Inc., SEOUL 07336 (KR)
(72) Inventor: NOH, Dongki, Seoul 08592 (KR); JU, Jeongwoo, Seoul 08592 (KR); BAEK, Seungmin, Seoul 08592 (KR); LEE, Jaekwang, Seoul 08592 (KR); LEE, Jaemin, Seoul 08592 (KR); PARK, Sungyeon, Seoul 08592 (KR); JUNG, Minkuk, Seoul 08592 (KR)
(74) Representative: Vossius & Partner Patentanwälte Rechtsanwälte mbB
(86) International application number: PCT/KR2020/014469
(87) International publication number: WO 2021/112402

(56) References cited:
- JP-A- S62 200 403
- KR-A- 20170 047 850
- KR-A- 20190 064 253
- KR-B1- 101 457 148
- KR-B1- 101 868 374
- US-A1- 2012 290 165
- US-A1- 2018 332 765
- US-A1- 2019 250 604

## Description

### Technical Field

An embodiment of the present disclosure relates to a mobile robot system that autonomously drives in a driving region, and a method for generating boundary information of the mobile robot system.

### Background Art

US 2019/250604 A1 relates to a method of mapping an area to be mowed with an autonomous mowing robot comprises receiving mapping data from a robot lawnmower, the mapping data specifying an area to be mowed and a plurality of locations of beacons positioned within the area to be mowed, and receiving at least first and second geographic coordinates for first and second reference points that are within the area and are specified in the mapping data.

In general, a mobile robot is a device that automatically performs a predetermined operation while driving by itself in a predetermined zone without a user's manipulation. The mobile robot senses an obstacle located in the zone to perform an operation by moving closer to or away from the obstacle.

Such a mobile robot may include a mobile robot that mows the lawn on a ground surface of a region as well as a cleaning robot that performs cleaning while driving in the region. In general, a mobile robot device may include a riding type device that mows the lawn or weeds the grass on the ground while moving according to a user's operation when the user rides on the device, and a walk-behind type or hand type device that mows the lawn while moving when the user manually pulls or pushes the device. Such a mobile robot device is moved by the user's direct manipulation to mow the lawn, so there is an inconvenience in that the user must directly operate the device. Accordingly, a mobile robot-type mobile robot device having an element capable of mowing the lawn in a mobile robot is being studied.

In the case of such a mobile robot for a lawn mower (lawn mower), since it operates outdoors rather than indoors, it drives over a wider region than a mobile robot that drives in an indoor environment. In the case of indoors, the ground is monotonous, and factors such as terrain/features that affect driving are limited, but in the case of outdoors, there are various factors that affect driving, and the terrain is greatly affected. In particular, since the mobile robot may drive in an unrestricted wide region due to the nature of an outdoor region, it is essential to set a driving region for the mobile robot to drive. Therefore, it is essentially required to set a driving region for the mobile robot to drive, that is, to set a boundary region and to accurately recognize the boundary region.

On the other hand, U.S. Patent Publication No. 2017-0150676 (published date: June 1, 2017) (hereinafter, referred to as a prior document) discloses a technology in which a plurality of beacons are installed at a boundary portion of the driving region to allow a robot to determine a relative position with respect to the beacons based on a signal transmitted from the beacons while driving along the boundary, and store coordinate information thereof so as to use the stored information for position determination. In other words, according to the prior document, signals are transmitted and received to and from the plurality of beacons distributed at the boundary portion of the driving region to set the driving region based on the transmission and reception result, thereby performing accurate driving region/position recognition using relative position information with respect to the plurality of beacons. Due to this, it may be possible to partially overcome the limitation of the position recognition of the mobile robot system.

However, in the prior document, the boundary region is set only by simply installing a beacon, and there is a limitation in which boundary setting can only be made in a limited way. Furthermore, since the boundary region is set only according to the installation state of the beacon, there is also a concern that boundary formation may be performed inaccurately depending on the communication performance of the beacon. That is, there is a limitation in which it is difficult to set a boundary according to a user's request and accurately set a boundary with a boundary setting technology in the related art. As a result, in the related art, a technology for performing an accurate and convenient boundary setting according to a user's request has not been proposed, and due to this, there is a problem in that the usability, safety, reliability and convenience of the mobile robot is inevitably limited.

### Disclosure of Invention

### Technical Problem

The present disclosure is intended to provide an embodiment of a mobile robot system capable of overcoming the limitation of the related art as described above, and a method of generating boundary information of the mobile robot system.

Specifically, the present disclosure is intended to provide an embodiment of a mobile robot system capable of simply and conveniently acquiring boundary information of a driving region of a mobile robot, and a method of generating boundary information of the mobile robot system.

In addition, the present disclosure is intended to provide an embodiment of a mobile robot system capable of quickly and easily performing boundary setting of a driving region, and a method of generating boundary information of the mobile robot system.

### Solution to Problem

In order to solve the foregoing problems, according to an embodiment of the present disclosure, there is provided a solution of matching a plurality of map data acquired by performing communication of a mobile robot to generate boundary information.

Specifically, first map data for positions of a plurality of transmitters may be generated based on a result of receiving transmission signals from the plurality of transmitters installed in a driving region, and second map data for a region corresponding to the driving region may be received from a communication target element in which map information of a region including the driving region is stored to match the first map data and the second map data so as to generate boundary information on a boundary region of the driving region.

That is, a mobile robot system and a method of generating boundary information of the mobile robot system of the present disclosure may generate the first map data based on a result of receiving the transmission signals, and receive the second map data for a region corresponding to the driving region from the communication target element to match the first map data and the second map data so as to generate boundary information of the driving region, thereby setting a boundary region.

Through such technical features, a mobile robot system and a method of generating boundary information of the mobile robot system provided in the present disclosure may match a plurality of map data acquired through the execution of communication to generate boundary information, thereby solving the foregoing problems.

The foregoing technical features may be applied and implemented to a lawn mower robot, a control method of the lawn mower robot, a lawn mower robot system, a control system of the lawn mower robot, a method of controlling the lawn mower robot, a method of setting a boundary region of the lawn mower robot, a method of generating/acquiring boundary information of the lawn mower robot system, and the like, and the present disclosure provides an embodiment of a mobile robot system and a method of generating boundary information of the mobile robot system using the foregoing technical features as a problem solving means.

An embodiment of a mobile robot system of the present disclosure having the foregoing technical feature as a means of solution may include a plurality of transmitters installed in a boundary region of a driving region to transmit transmission signals, a communication target element that stores map information of a region including the driving region to provide the map information to a communication target device, and a mobile robot that generates first map data for positions of the plurality of transmitters based on a reception result of the transmission signals, receives second map data for a region corresponding to the driving region from the communication target element to match the first map data and the second map data so as to generate boundary information of the driving region.

In addition, according to a method of generating boundary information in a mobile robot system having the foregoing technical feature as a means of solution, the mobile robot system including a plurality of transmitters installed in a boundary region of a driving region to transmit transmission signals, a communication target element that stores map information of a region including the driving region to provide the map information to a communication target device, and a mobile robot that generates first map data for positions of the plurality of transmitters based on a reception result of the transmission signals, receives second map data for a region corresponding to the driving region from the communication target element to generate boundary information of the driving region based on the first map data and the second map data, the method may include converting the first map data and the second map data into first coordinate information and second coordinate information, respectively, determining coordinate values corresponding to a position of any one transmitter in the first coordinate information, detecting a reference point that aligns with the coordinate values in the second coordinate information, aligning the first map data and the second map data based on the coordinate values and the reference point to match the first coordinate information and the second coordinate information, and generating boundary information of the driving region according to the matching result.

### Advantageous Effects of Invention

An embodiment of a mobile robot system and a method of generating boundary information of the mobile robot system of the present disclosure may match a plurality of map data acquired through the execution of communication with a communication target to generate boundary information, thereby having an effect capable of simply and conveniently acquiring boundary information.

Accordingly, there is an effect capable of simply and conveniently performing the setting of a boundary region as well as quickly and easily performing the boundary setting of a driving region.

In addition, an embodiment of a mobile robot system and a method of generating boundary information of the mobile robot system of the present disclosure may match map data based on an actual installation position and map data that guarantees visibility and reliability to acquire boundary information, thereby having an effect capable of performing the setting of a boundary region in a precise and detailed manner.

Accordingly, the mobile robot system may be controlled in various and efficient ways, thereby having an effect capable of increasing the efficiency, usability, and utility of the mobile robot system.

### Brief Description of Drawings

FIG. 1A is a conceptual diagram showing a driving principle of a mobile robot system.
FIG. 1B is a conceptual diagram showing a signal flow between devices for determining a position of a mobile robot system.
FIG. 2 is a conceptual diagram showing an embodiment of a driving region of a mobile robot.
FIG. 3A is a block diagram a showing an embodiment of a mobile robot.
FIG. 3B is a configuration view b showing an embodiment of a mobile robot.
FIG. 3C is a configuration view c showing an embodiment of a mobile robot.
FIG. 4 is a detailed block diagram of a moving robot.
FIG. 5 is a configuration view according to an embodiment of a mobile robot system disclosed in the present disclosure.
FIG. 6 is an exemplary view showing an example of a driving region according to an embodiment of the mobile robot system disclosed in the present disclosure.
FIG. 7A is an exemplary view showing an example of first map data according to an embodiment of the mobile robot system disclosed in the present disclosure.
FIG. 7B is an exemplary view showing an example of second map data according to an embodiment of the mobile robot system disclosed in the present disclosure.
FIG. 8 is a block diagram showing a process of generating boundary information according to an embodiment of the mobile robot system disclosed in the present disclosure.
FIG. 9 is a block diagram showing a process of matching first map data and second map data according to an embodiment of the mobile robot system disclosed in the present disclosure.
FIG. 10A is an exemplary view showing an example of determining a coordinate value of first coordinate information according to an embodiment of the mobile robot system disclosed in the present disclosure.
FIG. 10B is an exemplary view showing an example of detecting a reference point of second coordinate information according to an embodiment of the mobile robot system disclosed in the present disclosure.
FIG. 11 is an exemplary view showing an example of aligning coordinate values with reference points according to an embodiment of the mobile robot system disclosed in the present disclosure.
FIG. 12 is an exemplary view showing an example of an adjustment reference measurement according to an embodiment of the mobile robot system disclosed in the present disclosure.
FIG. 13A is an exemplary view a showing an example of a process of generating boundary information from a matching result according to an embodiment of the mobile robot system disclosed in the present disclosure.
FIG. 13B is an exemplary view b showing an example of a process of generating boundary information from a matching result according to an embodiment of the mobile robot system disclosed in the present disclosure.
FIG. 13C is an exemplary view c showing an example of a process of generating boundary information from a matching result according to an embodiment of the mobile robot system disclosed in the present disclosure.
FIG. 14 is a flowchart showing a sequence according to an embodiment of a boundary generation method of the mobile robot system disclosed in the present disclosure.

### Mode for the Invention

Hereinafter, embodiments of a mobile robot system and a control method thereof will be described in detail with reference to the accompanying drawings, and the same or similar elements are designated with the same numeral references regardless of the numerals in the drawings and their redundant description will be omitted.

In describing the technology disclosed herein, moreover, the detailed description will be omitted when specific description for publicly known technologies to which the invention pertains is judged to obscure the gist of the technology disclosed in the present disclosure. Also, it should be noted that the accompanying drawings are merely illustrated to easily explain the concept of the technology disclosed in the present disclosure, and therefore, they should not be construed to limit the concept of the technology by the accompanying drawings.

Hereinafter, an embodiment of a mobile robot system (hereinafter, referred to as a system) will be described.

In the system, the mobile robot may refer to a robot capable of autonomous driving, a mobile lawn mower robot, a lawn mower robot, a lawn mower device, or a mobile robot for a lawn mower.

The system may be a system of a mobile robot (hereinafter, referred to as a robot) that cuts the grass in a driving region. Here, the robot may refer to a lawn mower robot, and accordingly, the system 1 may refer to a drive/control/operation system of the lawn mower robot that cuts the grass in a driving region.

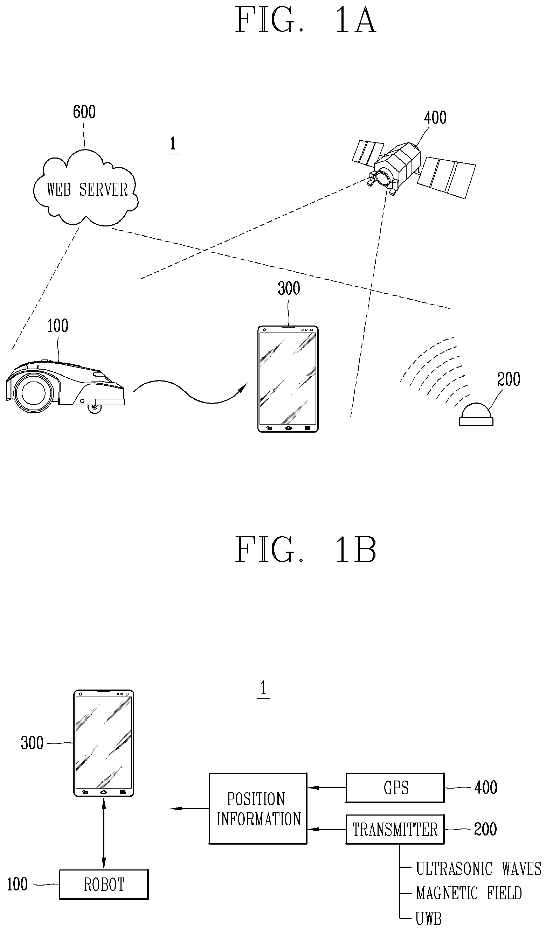

As illustrated in FIG. 1A, the system 1 includes a terminal 300 that displays a control screen for an operation control of the robot 100 and the robot 100 operating in response to a manipulation of the control screen That is, the terminal 300 may display the control screen on which the control of the mobile robot 100 is performed on a display, and the mobile robot 100 may operate to cut the grass in the driving region while driving in the driving region according to a manipulation on the control screen. Furthermore, the system 1 may further include at least one of a transmitter 200 that transmits and receives signals to and from at least one of the robot 100 and the terminal 300, a GPS satellite 400, and a web server 600.

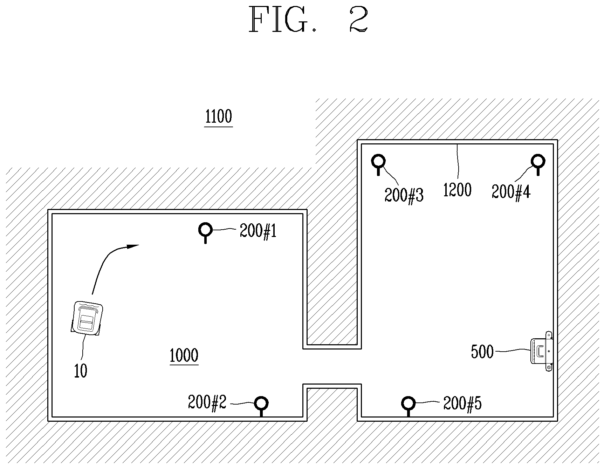

In the system 1, the robot 100 may operate according to a driving principle as illustrated in FIG. 1A, and a signal flow between devices for position determination may be carried out as illustrated in FIG. 1B. Accordingly, the robot 100 may drive in a driving region 1000 as illustrated in FIG. 2.

The robot 100 may drive by itself within the driving region 1000 as illustrated in FIG. 2. The robot 100 may perform a specific operation while driving. Here, the specific operation may be an operation of cutting the lawn within the driving region 1000. The driving region 1000 is a region corresponding to a driving and operating target of the robot 100, and a predetermined outdoor/field region may be defined as the driving region 1000. For instance, a garden, a yard, or the like, for the robot 100 to cut the lawn may be defined as the driving region 1000. A charging device 500 for charging the driving power of the robot 100 may be provided in the driving region 1000, and the robot 100 may be docked to the charging device 500 provided in the driving region 1000 to charge driving power.

The driving region 1000 may be defined as a predetermined boundary region 1200 as illustrated in FIG. 2. The boundary region 1200 may correspond to a boundary line between the driving region 1000 and an outer region 1100, thereby allowing the robot 100 to be driven within the boundary region 1200 so as not to deviate from the outer region 1100. In this case, the boundary region 1200 may be defined as a closed curve or a closed loop. The boundary region 1200 may be set based on coordinate information on a map for the driving region 1000. In this case, the robot 100 may recognize the boundary region 1200 by recognizing a virtual boundary line based on the coordinate information. Furthermore, the boundary region 1200 may be set by a wire 1200 defined as a closed curve or a closed loop. In this case, the wire 1200 may be installed in any region, and the robot 100 may drive within the driving region 1000 of a closed curve defined by the installed wire 1200.

In addition, one or more transmitters 200 may be disposed in the driving region 1000 as illustrated in FIG. 2. The transmitter 200 is a signal generation element that transmits a signal for allowing the robot 100 to determine position information, and may be distributed and installed within the driving region 1000. The robot 100 may receive a transmission signal transmitted from the transmitter 200 to determine a current position based on the reception result, or may determine position information on the driving region 1000. In this case, the robot 100 may receive the transmission signal through a receiver that receives the transmission signal. The transmitter 200 may be preferably disposed in the vicinity of the boundary region 1200 in the driving region 1000. In this case, the robot 100 may determine the boundary region 1200 based on the placement position of the transmitter 200 disposed in the vicinity of the boundary region 1200.

The robot 100 may communicate with the terminal 300 moving in a predetermined region as illustrated in FIG. 1A, and may drive by following the position of the terminal 300 based on data received from the terminal 300. The robot 100 may set a virtual boundary in a predetermined region based on position information received from the terminal 300 or collected while driving by following the terminal 300, and set an inner region defined by the boundary as the driving region 1000. When the boundary region 1200 and the driving region 1000 are set, the robot 100 may drive within the driving region 1000 so as not to deviate from the boundary region 1200. In some cases, the terminal 300 may set the boundary region 1200 and transmit the set boundary region to the robot 100. When the region is changed or expanded, the terminal 300 may transmit the changed information to the robot 100 to allow the robot 100 to drive in a new region. Furthermore, the terminal 300 may display data received from the robot 100 on a screen to monitor the operation of the robot 100.

The robot 100 or the terminal 300 may receive position information to determine a current position. The robot 100 and the terminal 300 may determine a current position based on position information transmitted from the transmitter 200 disposed in the driving region 1000, a GPS signal using the GPS satellite 400 or data information transmitted from the web server 600. The robot 100 and the terminal 300 may receive transmission signals transmitted from preferably three transmitters 200, and compare the signal reception results to determine the current position. In other words, three or more transmitters 200 may be preferably disposed in the driving region 1000.

The robot 100 sets any one point within the driving region 1000 as a reference position, and then calculates the position during movement as coordinates. For example, an initial start position, a position of the charging device 500 may be set as a reference position, and furthermore, coordinates with respect to the driving region 1000 may be calculated using the position of any one of the transmitters 200 as the reference position. In addition, the robot 100 may set an initial position as the reference position during each operation, and then determine the position while driving. The robot 100 may compute a driving distance with respect to the reference position, based on the number of rotations of the drive wheel 11, a rotational speed, and a rotational direction of the main body 10, and determine the current position within the driving region 1000 accordingly. Even in the case of determining position using the GPS satellite 400, the robot 100 may determine the position using any one point as the reference position.

As illustrated in FIG. 1B, the robot 100 may determine a current position based on position information transmitted from the transmitter 200 or the GPS satellite 400. The position information may be transmitted in the form of a GPS signal, an ultrasonic signal, an infrared signal, an electromagnetic signal, or an Ultra-Wide Band (UWB) signal. The transmission signal transmitted from the transmitter 200 may be preferably an Ultra-Wide Band (UWB) signal. Accordingly, the robot 100 may receive the UWB (Ultra-Wide Band) signal transmitted from the transmitter 200 to determine the current position based thereon.

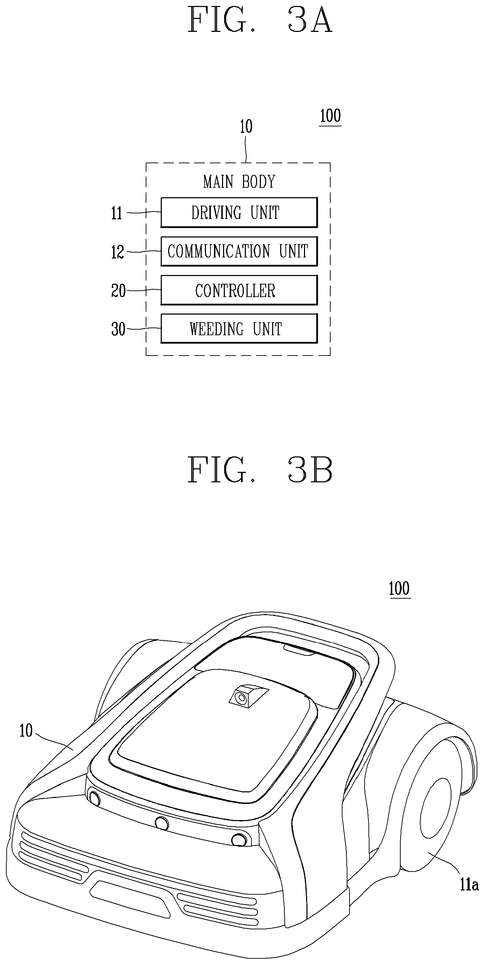

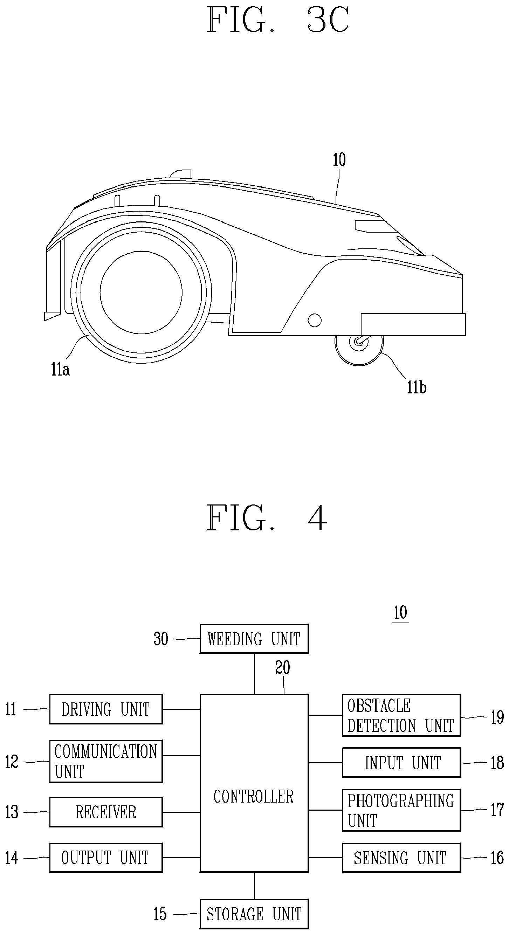

As illustrated in FIG. 3A, the robot 100 that cuts the grass while driving in the driving region 1000 may include a main body 10, a driving unit 11 that moves the main body 10, a communication unit 12 that communicates with a communication target element, a weeding unit 30 that cuts the grass on a ground surface while driving, and a controller 20 that controls the driving unit 11, the communication unit 12, and the weeding unit 30 to control the driving and weeding operation of the robot 100.

The robot 100 may be an autonomous driving robot including the main body 10 provided to be movable as illustrated in FIGS. 1B and 1C to cut the grass. The main body 10 defines an outer appearance of the robot 100, and is provided with at least one element for performing an operation such as driving of the robot 100 and cutting the grass. The main body 10 is provided with the driving unit 11 capable of moving and rotating the main body 10 in a desired direction. The driving unit 11 may include a plurality of rotatable driving wheels, and each wheel may be rotated individually to allow the main body 10 to be rotated in a desired direction. More specifically, the driving unit 11 may include at least one main driving wheel 11a and an auxiliary wheel 11b. For example, the main body 10 may include two main driving wheels 11a, and the main driving wheels may be provided on a rear bottom surface of the main body 10.

The robot 100 may allow the controller 20 to determine a current position of the main body 10 and control the driving unit 11 to drive within the driving region 1000 so as to control the driving of the main body 10, and control the weeding unit 30 to cut the grass on a ground surface while the main body 10 drives in the driving region 1000 so as to control the driving and weeding operation of the robot 100.

The robot 100 operating in this way, as illustrated in FIG. 4, may include the main body 10, the driving unit 11, the communication unit 12, the weeding unit 30, and the controller 20 to cut the grass while driving in the driving region 1000. Furthermore, the robot 100 may further include at least one of a receiver 13, an output unit 14, a storage unit 15, a sensing unit 16, a photographing unit 17, an input unit 18, and an obstacle detection unit 19.

The driving unit 11, which is a driving wheel provided at a lower portion of the main body 10, may be rotatably driven to move the main body 10. In other words, the driving unit 11 may operate to allow the main body 10 to be driven in the driving region 1000. The driving unit 11 may include at least one drive motor to move the main body 10 to allow the robot 100 to be driven. For instance, the driving unit 11 may include a left wheel drive motor that rotates a left wheel and a right wheel drive motor that rotates a right wheel.

The driving unit 11 may transmit information on a driving result to the controller 20, and receive a control command for an operation from the controller 20. The driving unit 11 may operate according to a control command received from the controller 20. In other words, the driving unit 11 may be controlled by the controller 20.

The communication unit 12 may communicate with one or more communication target elements that communicate with the robot 100. The communication unit 12 may communicate with one or more communication target elements in a wireless communication method. The communication unit 12 may communicate with the transmitter 200, and may also be connected to a predetermined network to communicate with the web server 600 or the terminal 300 that controls the robot 100. Here, communication with the web server 600 may be performed through the terminal 300, or the communication unit 12 and the web server 600 may directly communicate with each other. When communicating with the terminal 300, the communication unit 12 may transmit the generated map to the terminal 300, receive a command from the terminal 300, and transmit data on the operation state of the robot 100 to the terminal 300. The communication unit 12 may include a communication module such as Wi-Fi and WiBro, as well as short-range wireless communication such as ZigBee and Bluetooth to transmit and receive data.

The communication unit 12 may transmit information on a communication result to the controller 20, and receive a control command for an operation from the controller 20. The communication unit 12 may operate according to the control command received from the controller 20. In other words, the communication unit 12 may be controlled by the controller 20.

The receiver 13 may include a plurality of sensor modules for transmitting and receiving position information. The receiver 13 may include a position sensor module that receives the transmission signal from the transmitter 200. The position sensor module may transmit a signal to the transmitter 200. When the transmitter 200 transmits a signal using any one of an ultrasonic wave, UWB (Ultra-Wide Band), and an infrared ray, the receiver 13 may be provided with a sensor module that transmits and receives an ultrasonic, UWB, or infrared signal corresponding thereto. The receiver 13 may preferably include a UWB sensor. For reference, UWB radio technology refers to using a very wide frequency band of several GHz or more in a baseband without using a radio carrier (RF carrier). UWB radio technology uses very narrow pulses of several nanoseconds or several picoseconds. Since the pulses emitted from such a UWB sensor are several nanoseconds or several picoseconds, penetrability is good, and accordingly, very short pulses emitted from other UWB sensors may be received even when there are obstacles around them.

When the robot 100 drives by following the terminal 300, the terminal 300 and the robot 100 may each include a UWB sensor to transmit and receive a UWB signal to and from each other through the UWB sensor. The terminal 300 may transmit a UWB signal through a UWB sensor, and the robot 100 may determine the position of the terminal 300 based on the UWB signal received through the UWB sensor, and move by following the terminal 300. In this case, the terminal 300 operates at a transmitting side, and the robot 100 operates at a receiving side. When the transmitter 200 is provided with a UWB sensor to transmit a transmission signal, the robot 100 or the terminal 300 may receive a transmission signal transmitted from the transmitter 200 through the UWB sensor provided therein. In this case, a signal method of the transmitter 200 and a signal method of the robot 100 and the terminal 300 may be the same or different.

The receiver 13 may include a plurality of UWB sensors. When two UWB sensors are included in the receiver 17, for example, they may be provided at the left and right sides of the main body 10, respectively, to receive transmission signals, thereby comparing a plurality of received signals to calculate an accurate position. For example, when distances measured by the left sensor and the right sensor are different according to the positions of the robot 100 and the transmitter 200 or the terminal 300, a relative position between the robot 100 and the transmitter 200 or the terminal 300 and a direction of the robot 100 may be determined based thereon.

The receiver 13 may further include a GPS module that transmits and receives a GPS signal from the GPS satellite 400.

The receiver 13 may transmit a reception result of the transmission signal to the controller 20, and receive a control command for an operation from the controller 20. The receiver 13 may operate according to a control command received from the controller 20. In other words, the receiver 13 may be controlled by the controller 20.

The output unit 14, which is an output element for outputting information on the state of the robot 100 in the form of a voice, may include a speaker, for instance. When an event occurs during the operation of the robot 100, the output unit 14 may output an alarm related to the event. For example, when the driving power of the robot 100 is exhausted, a shock is applied to the robot 100, or an accident occurs on the driving region 1000, an alarm voice may be output to transmit information on the accident to the user.

The output unit 14 may transmit information on an operation state to the controller 20, and receive a control command for an operation from the controller 20. The output unit 14 may operate according to a control command received from the controller 20. In other words, the output unit 14 may be controlled by the controller 20.

The storage unit 15 may include a hard disk drive (HDD), a solid state disk (SSD), a silicon disk drive (SDD), a ROM, RAM, CD-ROM, a magnetic tape, a floppy disk, and an optical data storage device as a storage element for storing data that can be read by a microprocessor. In the storage unit 15, a received signal may be stored, reference data for determining an obstacle may be stored, and obstacle information on the sensed obstacle may be stored. In addition, control data for controlling the operation of the robot 100, data according to the operation mode of the robot 100, position information to be collected, information on the driving region 1000 and the boundary region 1200 may be stored in the storage unit 15.

The sensing unit 16 may include one or more sensors that sense information on the posture and operation of the main body 10. The sensing unit 16 may include at least one of a tilt sensor that detects a movement of the main body 10 and a speed sensor that detects a driving speed of the driving unit 11. The tilt sensor may be a sensor that senses the posture information of the main body 10. When the main body 10 is inclined in a front, rear, left, or right direction, the tilt sensor may calculate an inclined direction and angle thereof to sense the posture information of the main body 10. A tilt sensor, an acceleration sensor, or the like may be used for the tilt sensor, and any of a gyro type, an inertial type, and a silicon semiconductor type may be applied in the case of the acceleration sensor. Moreover, in addition, various sensors or devices capable of sensing the movement of the main body 10 may be used. The speed sensor may be a sensor that senses a driving speed of a driving wheel provided in the driving unit 11. When the driving wheel rotates, the speed sensor may sense the rotation of the driving wheel to detect the driving speed.

The sensing unit 16 may transmit information on a sensing result to the controller 20, and receive a control command for an operation from the controller 20. The sensing unit 16 may operate according to a control command received from the controller 20. In other words, the sensing unit 16 may be controlled by the controller 20.

The photographing unit 17 may be a camera for photographing the vicinity of the main body 10. The photographing unit 17 may photograph the vicinity of the main body 10 to generate image information on the driving region 1000 of the main body 10. The photographing unit 17 may photograph the front of the main body 10 to detect obstacles present in the vicinity of the main body 10 and on the driving region 1000. The photographing unit 17, which is a digital camera, may include an image sensor (not shown) and an image processing unit (not shown). The image sensor, which is a device that converts an optical image into an electrical signal, is configured with a chip in which a plurality of photo diodes are integrated, and a pixel is exemplified as a photo diode. Charges are accumulated in each of the pixels by an image formed on the chip by light passing through a lens, and the charges accumulated in the pixels are converted into an electrical signal (e.g., voltage). As an image sensor, CCD (Charge Coupled Device), CMOS (Complementary Metal Oxide Semiconductor), or the like are well known. In addition, the photographing unit 12 may include the image processing unit (DSP) that generates the image information through image processing on the photographed result.

The photographing unit 17 may transmit a reception result to the controller 20, and receive a control command for an operation from the controller 20. The photographing unit 17 may operate according to a control command received from the controller 20. In other words, the photographing unit 17 may be controlled by the controller 20.

The input unit 18 may include an input element such as at least one button, a switch, and a touch pad, and an output element such as a display module to receive a user command and output an operation state of the robot 100. For example, a command for the execution of the monitoring mode may be input through the display, and a state for the execution of the monitoring mode may be output.

The input unit 18 may display a state of the robot 100 through the display, and display a control screen on which a control operation of the robot 100 is carried out. The control screen may refer to a user interface screen on which a driving state of the robot 100 is displayed, and to which a command for a driving operation of the robot 100 is input from a user. The control screen may be displayed on the display through the control of the controller 20, and the display on the control screen, the input command, and the like may be controlled by the controller 20.

The input unit 18 may transmit information on an operation state to the controller 20, and receive a control command for an operation from the controller 20. The input unit 18 may operate according to a control command received from the controller 20. In other words, the input unit 18 may be controlled by the controller 20.

The obstacle detection unit 19 includes a plurality of sensors to detect an obstacle existing in a driving direction. The obstacle detection unit 19 may detect an obstacle in front of the main body 10, that is, in a driving direction, using at least one of laser, ultrasonic, infrared, and 3D sensors. The obstacle detection unit 19 may further include a cliff detection sensor provided on a rear surface of the main body 10 to sense a cliff.

The obstacle detection unit 19 may transmit information on a detection result to the controller 20, and receive a control command for an operation from the controller 20. The obstacle detection unit 19 may operate according to a control command received from the controller 20. In other words, the obstacle detection unit 19 may be controlled by the controller 20.

The weeding unit 30 mows the lawn on the ground surface while driving. The weeding unit 30 may be provided with a brush or blade for mowing the lawn to mow the lawn on the ground through rotation.

The weeding unit 30 may transmit information on an operation result to the controller 20, and receive a control command for an operation from the controller 20. The weeding unit 30 may operate according to a control command received from the controller 20. In other words, the weeding unit 30 may be controlled by the controller 20.

The controller 20 may include a central processing unit to perform overall operation control of the robot 100. The controller 20 may determine the state of the driving region 1000 while driving in the driving region 1000 through the main body 10, the driving unit 11, and the photographing unit 17 to control the driving of the main body 10, and control the function/operation of the robot 100 to be performed through the communication unit 12, the receiver 13, the output unit 14, the storage unit 15, the sensing unit 16, the input unit 18, the obstacle detection unit 19, and the weeding unit 30.

The controller 20 may control the input/output of data, and control the driving unit 11 to allow the main body 10 to be driven according to a setting. The controller 20 may control the driving unit 11 to independently control the operation of the left wheel drive motor and the right wheel drive motor, thereby controlling the main body 10 to drive in a straight or rotating manner.

The controller 20 may set the boundary region 1200 on the basis of position information determined based on at least one of the position information received from the terminal 300 or the web server 600 and the transmission signal received from the transmitter 200. The controller 20 may also set the boundary region 1200 based on position information collected by itself while driving. The controller 20 may set any one of regions defined by the set boundary region 1200 as the driving region 1000. The controller 20 may connect discontinuous position information with a line or a curve to set the boundary 1200 in a closed loop shape, and set an inner region thereof as the driving region 1000. When the driving region 1000 and the boundary region 1200 are set, the controller 20 may control the driving of the main body 10 to be driven within the driving region 1000 so as not to deviate from the set boundary region 1200. The controller 20 may determine a current position based on the received position information, and control the driving unit 11 to allow the determined current position to be located within the driving region 1000 so as to control the driving of the main body 10.

In addition, the controller 20 may control the driving of the main body 10 to be driven by avoiding an obstacle according to obstacle information received by at least one of the photographing unit 17 and the obstacle detection unit 19. In this case, the controller 20 may modify the driving region 1000 by reflecting the obstacle information to region information previously stored for the driving region 1000.

When the boundary region 1200 is set during an initial setting for driving in the driving region 1000, the robot 100 may drive in the driving region 1000 based on the set information. Here, the setting of the boundary region 1200 is set based on a result of receiving the transmission signal from the transmitter 200 while the robot 100 autonomously drives in the driving region 1000, or carried out through communication between the robot 100 and the terminal 300.

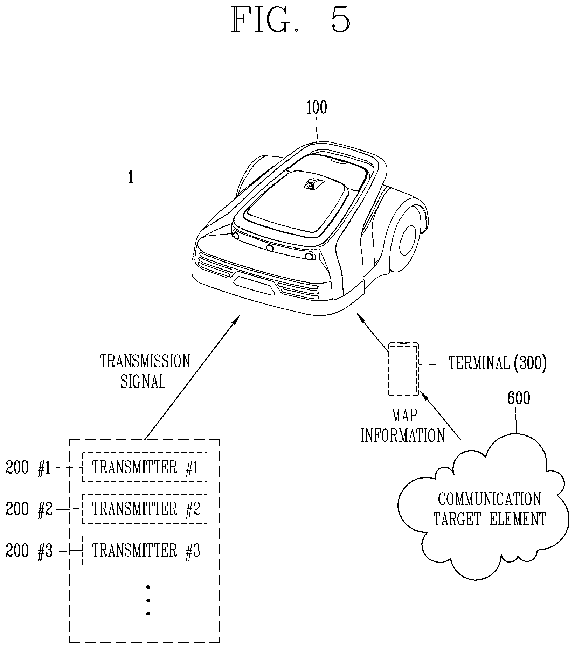

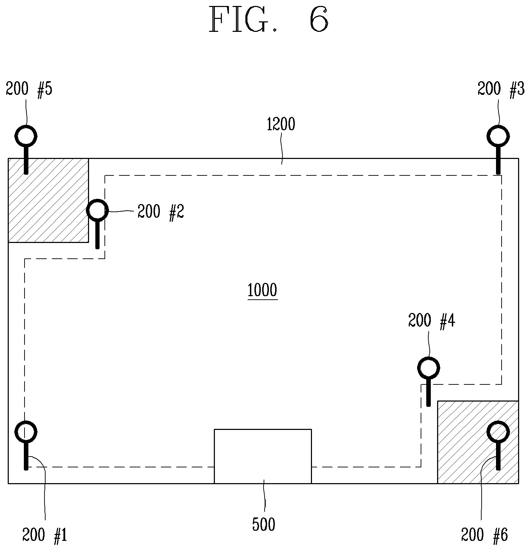

The system 1, which is a system in which the setting of the boundary region 1200 is carried out as described above, includes a plurality of transmitters 200, a communication target element 600, and the robot 100 as illustrated in FIG. 5. That is, the system 1, which is a mobile robot system including the plurality of transmitters 200, the communication target element 600, and the robot 100, generates boundary information on the boundary region 1200 of the driving region 1000 to set the boundary region 1200 as illustrated in FIG. 6.

In the system 1, the plurality of transmitters 200 are installed in the boundary region 1200 of the driving region 1000 to transmit transmission signals. The plurality of transmitters 200 may be dispersedly installed in the boundary region 1200. For instance, as illustrated in FIG. 6, the plurality of transmitters 200 may be dispersedly installed at each corner of the boundary region 1200. Preferably, at least three of the plurality of transmitters 200 are dispersedly installed in the boundary region 1200 to transmit the transmission signals from the installed positions, respectively. As illustrated in FIG. 6, each of the plurality of transmitters 200 dispersedly installed in the boundary region 1200 may transmit the transmission signal, which is a basis for determining the position of the robot 100 and setting the boundary region 1200. The transmission signal transmitted from each of the plurality of transmitters 200 may be received by the robot 100 and the terminal 300.

In the system 1, map information of a region including the driving region 1000 is stored in the communication target element 600 stores and provided to the communication target device. Here, the communication target element 600 may be the web server 600, and the communication target device may be the robot 100 or the terminal 300. The web server 600 may directly communicate with the robot 100 or perform communication with the robot 100 while communicating with the terminal 300 that communicates with the robot 100. The communication target element 600 may store control information related to the control of the system 1. For instance, data related to an application of the robot 100 or the terminal 300 or data related to an operation history of the robot 100 may be stored. Accordingly, remote control of the system 1 may be performed through the communication target element 600. The communication target element 600 may store the map information including the driving region 1000, and provide the map information to at least one of the robot 100 and the terminal 300. Here, the map information may be a commercial map provided on the web, for instance, a Google map. The map information may be provided in the form of a CAD drawing, and the robot 100 may determine at least one of a position, a terrain, a feature, an area, an azimuth, and an actual measurement of the driving region 1000 using the map information. Furthermore, the communication target element 600 may receive information on the current position of the robot 100 from the GPS satellite 400.

In the system 1, the robot 100 generates first map data for the positions of the plurality of transmitters 200 based on a reception result of the transmission signal, and receives second map data for a region corresponding to the driving region 1000 from the communication target element 600 to match the first map data and the second map data and generate boundary information of the driving region 1000. In this case, the robot 100 may receive the second map data through the communication unit 12 communicating with the communication target element 600. Here, the boundary information may refer to virtual boundary information set as the boundary region 1200. Accordingly, the robot 100 may set the boundary region 1200 according to the boundary information to drive in the driving region 1000. The boundary information may be coordinate information of a portion corresponding to the boundary region 1200 on the coordinate information based on any one point on the driving region 1000.

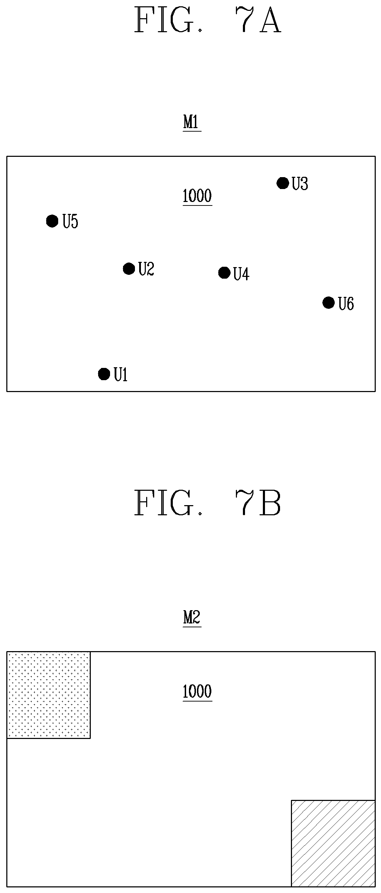

The first map data may be map information generated by the robot 100. The first map data, which is map information generated based on a result of receiving the transmission signal, may be map information on the installation positions of the plurality of transmitters 200. The first map data may be map information in a form in which points UI to U6 corresponding to the positions where the plurality of transmitters 200 are installed are displayed, as illustrated in FIG. 7A. That is, the robot 100 may determine the positions of the plurality of transmitters 200 based on the reception result, and generate the first map data as illustrated in FIG. 7A.

The second map data may be map information generated by the communication target element 600. The second map data, which is map information for a region corresponding to the driving region 1000 from the map information stored in the communication target element 600, may be actual map information of the driving region 1000. As illustrated in FIG. 7B, the second map data may be map information according to actual terrains and features on the driving region 1000. That is, the communication target element 600 may determine an area corresponding to the driving region 1000 on the map information, and generate the second map data as illustrated in FIG. 7B.

The robot 100 may match the first map data and the second map data as illustrated in FIGS. 7A and 7B, respectively to generate the boundary information, thereby setting the boundary region 1200.

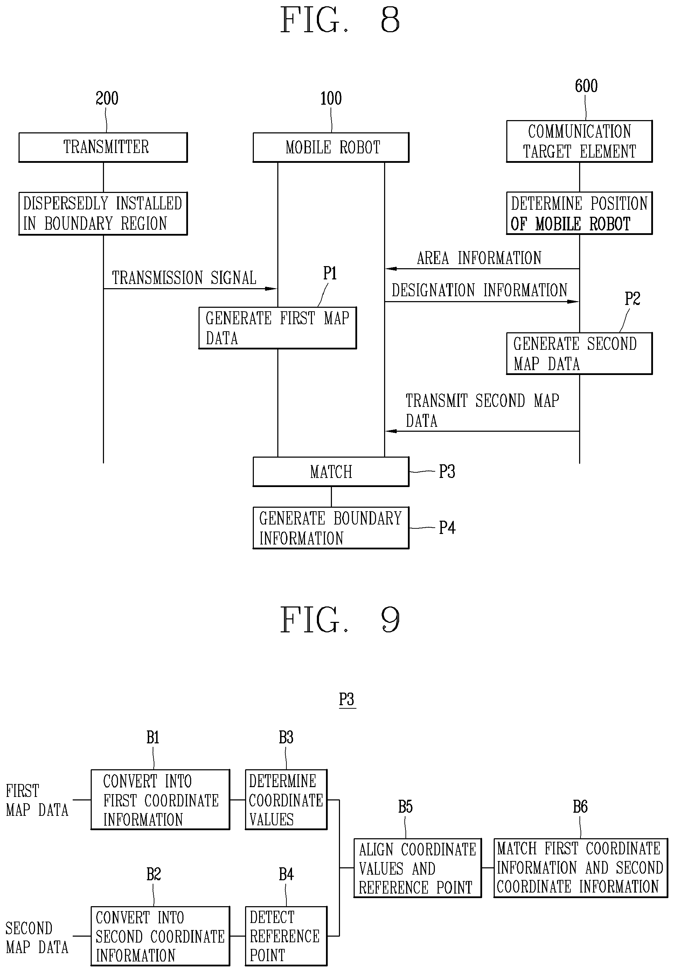

As such, a detailed process in which the robot 100 matches the first map data and the second map data to generate the boundary information may be as illustrated in FIG. 8.

First, the plurality of transmitters 200 may be dispersedly installed in the boundary region 1200 and then transmit the transmission signals, respectively. The robot 100 may determine the position of each of the plurality of transmitters 200 based on a reception result of the transmission signals transmitted from each of the plurality of transmitters 200 to generate the first map data (P1).

The communication target element 600 may generate the second map data according to a current position of the robot 100. In this case, upon receiving a request for generating and transmitting the second map data from the robot 100, the communication target element 600 may determine the current position of the robot 100 to generate the second map data. After determining the current position of the robot 100, the communication target element 600 may transmit area information corresponding to the current position obtained from the map information to the robot 100, and receive designation information on a portion corresponding to the driving region 1000 on the area information from the robot 100 to generate the second map data according to the designation information (P2). That is, the communication target element 600 may detect the area information to transmit the detected area information to the robot 100, and receive the designation information to generate the second map data according to the designation information (P2) when the designation information is designated by the robot 100. The communication target element 600 may detect the area information corresponding to the current position from the map information based on the current location and transmit the detected area information to the robot 100. Then, when the designation information corresponding to the driving region 1000 in the area information is designated by the robot 100, the designation information may be received from the robot 100. After receiving the designation information, the communication target element 600 may generate the second map data according to the designated information (P2), and then transmit the second map data to the robot 100.

When the first map data is generated and the second map data is received, the robot 100 may match the first map data and the second map data into one map data (P3) to generate the boundary information (P4). In this case, the robot 100 may match the first map data and the second map data according to a predetermined process. For instance, the first map data and the second map data may be matched according to a preset matching reference or a preset matching method. A specific process for the robot 100 to match the first map data and the second map data may be carried out by a process as illustrated in FIG. 9.

As illustrated in FIG. 9, the robot 100 converts the first map data and the second map data into first coordinate information and second coordinate information, respectively, in the same coordinate system, and match the first map data and the second map data using the first coordinate information and the second coordinate information (B1 to B6).

The robot 100 may convert the first map data into the first coordinate information (B1), convert the second map data into the second coordinate information (B2), and align the first map data and the second map data that have been converted into the same coordinate system to match the first map data and the second map data to one map data.

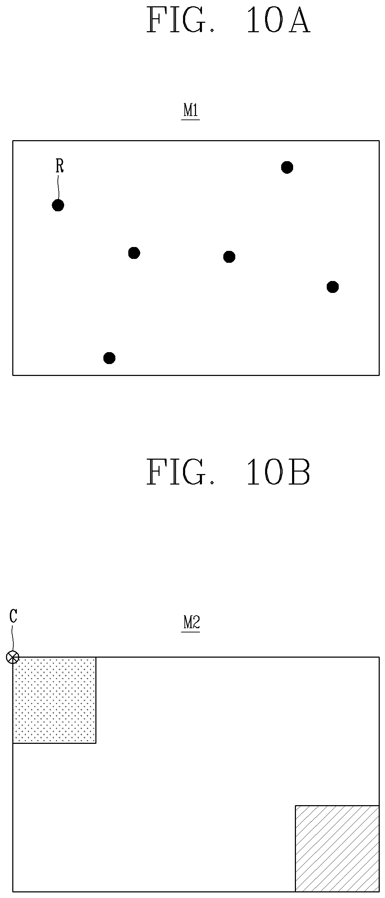

After converting the first map data and the second map data into the first coordinate information and the second coordinate information, respectively (B1 and B2), the robot 100 may determine coordinate values corresponding to the position of any one transmitter from the first coordinate information (B3), and detect a reference point aligning with the coordinate values from the second coordinate information (B4) to align the first coordinate information and the second coordinate information based on the coordinate values and the reference point (B5 and B6) so as to match the first map data and the second map data. As illustrated in FIG. 10A, the robot 100 may determine the coordinate values R corresponding to the position of any one transmitter from the first coordinate information M1 (B3). In this case, the robot 100 may determine coordinates corresponding to a position of any one of transmitters located in the outermost periphery among coordinates on the first coordinate information M1 as the coordinate values (B3). For instance, as illustrated in FIG. 10A, the coordinates R corresponding to the position of the transmitter located at an upper left end of the driving region 1000 may be determined as the coordinate values (B3). After determining the coordinate values R, the robot 100 may detect the reference point C that aligns with the coordinate values R from the second coordinate information M2, as illustrated in FIG. 10B. In this case, the robot 100 may detect a point that aligns with the coordinate values R in the second coordinate information M2 or that is closest to the coordinate values R as the reference point C (B4). For instance, when the coordinate values R are determined as illustrated in FIG. 10A, a vertex C at an upper left end of the driving region 1000 may be detected as the reference point C (B4) as illustrated in FIG. 10B.

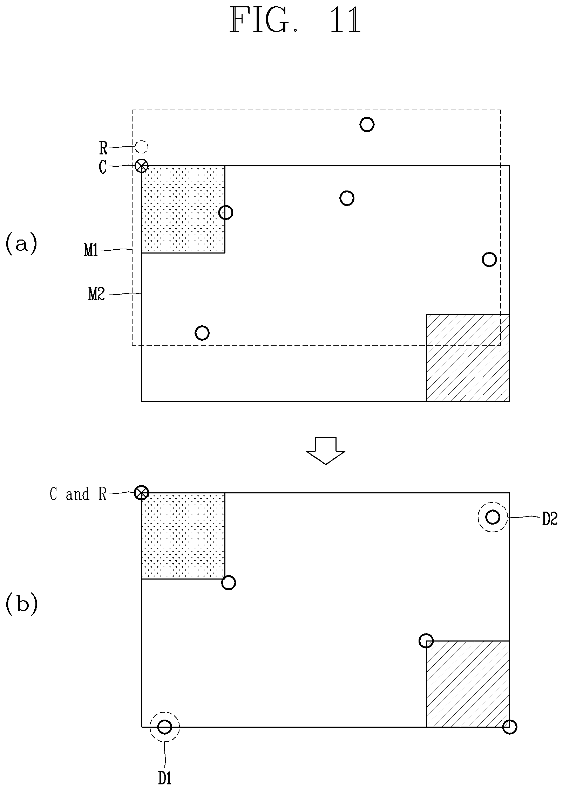

After determining the coordinate values R (B3) and detecting the reference point C (B4), the robot 100 may align the coordinate values R with the reference point C (B5). That is, the robot 100 may align the coordinate values R with the reference point C to align the first coordinate information M1 with the second coordinate information M2. For example, as illustrated in (a) of FIG. 11, the coordinate values R of the first coordinate information M1 may be aligned with the reference point C of the second coordinate information M2, the first coordinate information M1 and the second coordinate information M2 may be overlapped with each other. Accordingly, as illustrated in (b) of FIG. 11, the coordinates of the first coordinate information M1 may be disposed on the second coordinate information M2.

After aligning the coordinate values R with the reference point C (B5), the robot 100 may adjust at least one of an angle and a ratio of the first coordinate information M1 based on the coordinate values R to align the first coordinate information with the second coordinate information (B6). That is, after aligning the coordinate values R with the reference point C as illustrated in (b) of FIG. 11, the robot 100 may adjust at least one of an angle and a ratio of the first coordinate information M1 based on the coordinate values R such that the remaining coordinates of the first coordinate information M1 are exactly disposed on the second coordinate information M2 to align the first coordinate information with the second coordinate information.

The robot 100 may rotate the first coordinate information M1 to allow errors D1 and D2 between the first coordinate information M1 and the second coordinate information M2 to be within a predetermined range while the coordinate values R are fixed to the reference point C, thereby adjusting the angle of the first coordinate information M1. That is, when the angle of the first coordinate information M1 is adjusted based on the coordinate values R, the robot 100 may rotate the first coordinate information M1 based on the coordinate values R to adjust the angle of the first coordinate information M1 while the coordinate values R is aligned with the reference point C, thereby allowing the errors D1 and D2 between the first coordinate information M1 and the second coordinate information M2 to be within a predetermined range. For instance, when there is a difference between the first coordinate information M1 and the second coordinate information M2 by a predetermined angle as illustrated in (a) of FIG. 11, the coordinate values R may be rotated while the coordinate values R are aligned with the reference point C (fixed to the reference point C) such that the coordinates of the first coordinate information M1 are included in the second coordinate information M2 as illustrated in (b) of FIG 11.

The robot 100 may detect an actual distance between any two points on the driving region 1000, detect an estimated distance between coordinates corresponding to the two points, respectively, on the first coordinate information M1, and measure an adjustment reference based on the actual distance and the estimated distance, thereby reflecting the adjustment reference to the first coordinate information M1 to adjust a ratio of the first coordinate information M. That is, when a ratio of the first coordinate information M1 is adjusted based on the coordinate values R, the robot 100 may reflect the adjustment reference measured based on the actual distance and the estimated distance to a distance between coordinates on the first coordinate information M1 to adjust a distance ratio between the coordinates while the coordinate values R are aligned with the reference point C, thereby allowing the errors D1 and D2 between the first coordinate information M1 and the second coordinate information M2 to be within the predetermined range. Here, the adjustment reference may be measured as a ratio of the actual distance to the estimated distance. For instance, it may be measured as a ratio of an actual distance/estimated distance. As a specific example, when the actual distance is 9 [m] and the estimated distance is 10 [m], the adjustment reference may be measured as 9/10 = 0.9. In this case, a distance ratio between coordinates on the first coordinate information M1 may be adjusted to an actual distance by multiplying each distance between coordinates on the first coordinate information M1 by 0.9, which is the adjustment reference, thereby allowing the first coordinate information M1 and the second coordinate information M2 to be aligned with each other.

When adjusting a ratio of the first coordinate information M1, the robot 100 may detect an actual distance between and the reference point C and any one straight line point on a straight line to the reference point C, detect an estimated distance between the coordinate values R and adjacent values adjacent to the straight line point on the first coordinate information M1, and measure the adjustment reference based on the reference point C and the straight line point, thereby reflecting the adjustment reference to each distance between the coordinates of the first coordinate information M1. That is, when measuring the adjustment reference to reflect it to each distance between the coordinates of the first coordinate information M1, the robot 100 may measure the adjustment reference based on an actual distance between the reference point C and the straight line point, and an estimated distance between the coordinate values R and the adjacent values, corresponding to the actual distance on the coordinate information M1, thereby allowing the adjustment reference measured from the reference point C and the straight line point to be commonly reflected to each distance between the coordinates of the first coordinate information M1.

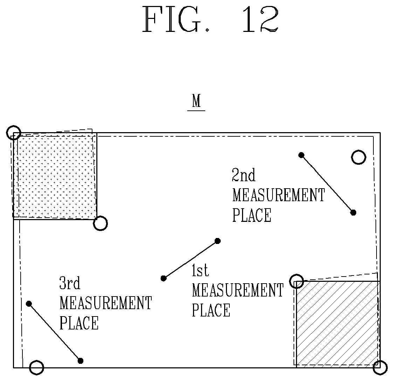

When adjusting a ratio of the first coordinate information M1, the robot 100 may detect actual distances between a plurality of any two points, respectively, detect estimated distances between the coordinates corresponding to the plurality of any two points, respectively, and measure a plurality of adjustment references, respectively, based on a plurality of actual distances and a plurality of estimated distances, thereby reflecting the plurality of adjustment references to distances between the coordinates of the first coordinate information M1 corresponding thereto, respectively. That is, when measuring the adjustment reference to reflect it to each distance between the coordinates of the first coordinate information M1, as illustrated in FIG. 12, the robot 100 may measure a plurality of adjustment references based on actual distances between the plurality of two points, respectively, and estimated distances corresponding to the plurality of two points, respectively, thereby reflecting the plurality of adjustment references measured from the plurality of two points, respectively, to distances between the coordinates of the first coordinate information M1, respectively.

When adjusting a ratio of the first coordinate information M1, the robot 100 may detect actual distances between a plurality of any two points, respectively, detect estimated distances between coordinates corresponding to the plurality of any two points, respectively, and measure a plurality of adjustment references based on a plurality of actual distances and a plurality of estimated distances, respectively, thereby reflecting an average value of the plurality of adjustment references to each distance between the coordinates of the first coordinate information M1. That is, when measuring the adjustment reference to reflect it to each distance between the coordinates of the first coordinate information M1, as illustrated in FIG. 12, the robot 100 may measure a plurality of adjustment references based on actual distances between the plurality of two points, respectively, and estimated distances corresponding to the plurality of two points, respectively, and calculate an average value of the plurality of adjustment references, thereby allowing the average value measured from each of the plurality of two points to be commonly reflected to each distance between the coordinates of the first coordinate information M1.

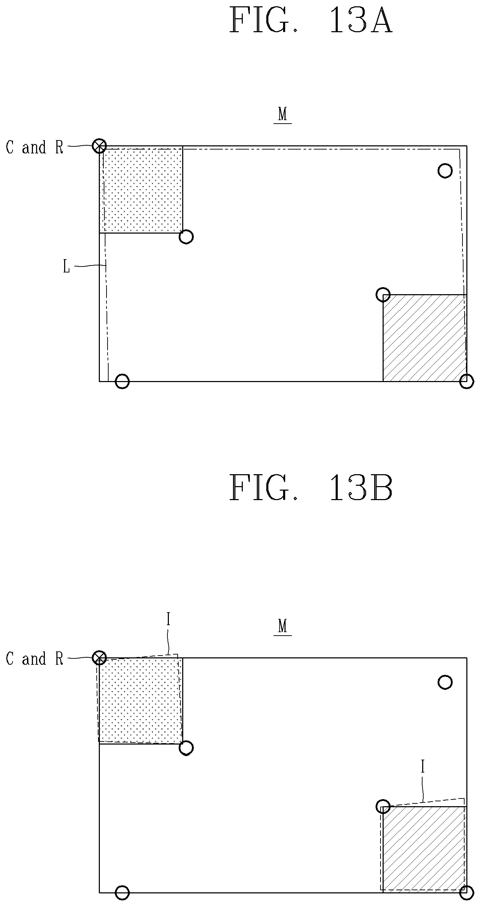

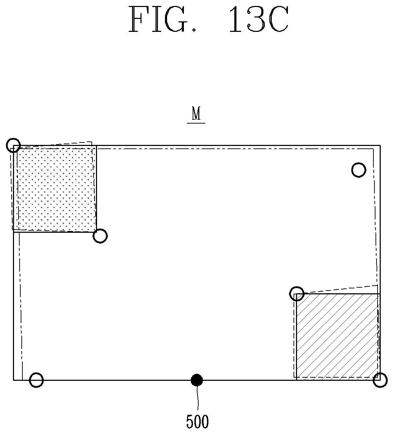

In this way, the robot 100 that aligns the first coordinate information M1 with the second coordinate information M2 to match the first map data and the second map data may generate the boundary information from the matching result. The robot 100 may allow the matching result to be output and displayed on an outside of the robot 100 or a control element that controls the robot 100, and generate the boundary information in response to a manipulation on the output display. That is, when matching the first map data and the second map data to generate the boundary information from the matching result, the robot 100 may allow the matching result to be displayed externally, thereby generating the boundary information in response to a manipulation of at least one of correction, modification, and setting on the output display, and setting the boundary region 1200 according to the boundary information. In this case, the output display may be carried out through the input unit 18 of the robot 100 or carried out through the terminal 300. As a specific example of generating the boundary information in response to a manipulation on the output display, when a matching result obtained by aligning the first coordinate information M1 with the second coordinate information M2 is output and displayed on an outside of the robot 100 or the control element (M), a setting manipulation L of the boundary region 1200 may be carried out on the output display M as illustrated in FIG. 13A. As described above, when the region setting manipulation L is carried out on the output display M, the boundary information may be generated in response to the region setting manipulation L. Furthermore, as illustrated in Fig. 13B, an island setting manipulation I may be carried out on the output display M. As described above, when the island setting manipulation I is carried out on the output display M, the boundary information may be generated in response to the island setting manipulation I. In addition, as illustrated in FIG. 13C, a placement setting manipulation of one or more apparatuses including the charging device 500 may be carried out on the output display M. As such, when the placement setting manipulation is carried out on the output display M, the boundary information may be generated in response to the placement setting manipulation. When a specific setting for the driving region 1000 is carried out in this process, the robot 100 may generate the boundary information by reflecting the setting result.

As described above, the robot 100 that generates the boundary information may store image data for each process in which the generation of the boundary information is carried out by matching the first map data and the second map data. That is, as illustrated in FIG. 9, the robot 100 may store images in each process of matching the first map data and the second map data to generate the boundary information in the form of data. For instance, the image data of each process of aligning the first coordinate information with the second coordinate information illustrated in FIGS. 10A to 13C may be stored in the storage unit 15. Through this, the correction of the boundary information may be carried out by comparing it with data stored during the resetting of the boundary region 1200, or matching with position information transmitted from at least one of the terminal 300, the GPS satellite 400 and the communication target element 600 may be easily carried out.

As described above, the system 1 may match the first map data and the second map data obtained from performing communication with the plurality of transmitters 200 and the communication target element 600 to generate the boundary information, thereby easily and accurately performing the setting of the boundary region 1200 without separate driving/control for the generation of the boundary information.

The system 1 as described above may be implemented by applying a method of generating boundary information of a mobile robot system to be described below (hereinafter, referred to as a generation method).

The generation method, which is a method for generating the boundary information in the foregoing system 1, may be applied to the foregoing system 1, and may also be applied to another system other than the foregoing the system 1.

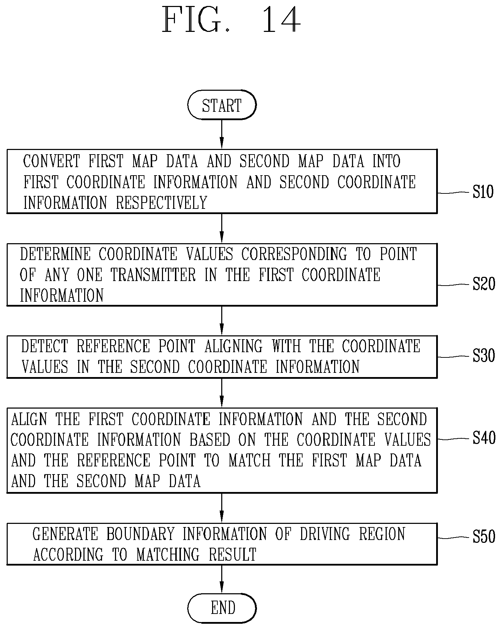

The generation method may be a method in which the robot 100 generates the boundary information in the system 1 including the plurality of transmitters 200, the communication target element 600, and the robot 100. The generation method may also be a method in which the terminal 300 remotely controlling the robot 100 generates the boundary information. As illustrated in FIG. 14, the generation method includes converting the first map data and the second map data into first coordinate information M1 and second coordinate information M2, respectively (S10), determining coordinate values R corresponding to a position of any one transmitter from the first coordinate information M1 (S20), detecting a reference point C that aligns with the coordinate values R from the second coordinate information M2 (S30), aligning the first coordinate information M1 and the second coordinate information M2 based on the coordinate values R and the reference point C to match the first map data and the second map data (S40), and generating boundary information of the driving region 1000 according to the matching result (S50).

That is, the generation of the boundary information in the system 1 may include the converting step (S10), the determining step (S20), the detecting step (S30), the matching step (S40), and the generating step (S50). Accordingly, the robot 100 or the terminal 300 may generate the boundary information in the order of converting the first map data and the second map data into the first coordinate information M1 and the second coordinate information M2, respectively (S10), determining the coordinate values R from the first coordinate information M1 (S20), detecting the reference point C from the second coordinate information M2 (S30), and aligning the first coordinate information M1 and the second coordinate information M2 based on the coordinate values (R) and the reference point (C) to match the first map data and the second map data (S40) to generate the boundary information (S50).

The converting step (S10) may be generating, by the robot 100 or the terminal 300, the first map data based on a result of receiving the transmission signals transmitted from the plurality of transmitters 200, respectively, receiving the second map data from the communication target element 600, and then converting the first map data and the second map data into the first coordinate information M1 and the second coordinate information M2, respectively.

In the converting step (S10), the robot 100 or the terminal 300 may convert the first map data and the second map data into the first coordinate information M1 and the second coordinate system information M2, respectively, in the same coordinate system. Accordingly, the first coordinate information M1 and the second coordinate information M2 may be aligned with each other on the same coordinate system.

The determining step (S20) may be determining, by the robot 100 or the terminal 300, the coordinate values R from the first coordinate information M1.

In the determining step (S20), the robot 100 or the terminal 300 may determine coordinates corresponding to a position of any one of the transmitters located in the outermost periphery among coordinates on the first coordinate information M1 as the coordinate values. For instance, as illustrated in FIG. 10A, the coordinates R corresponding to the position of the transmitter located at an upper left end of the driving region 1000 may be determined as the coordinate values (B3).

The detecting step (S30) may be detecting, by the robot 100 or the terminal 300, the reference point C from the second coordinate information M2.

In the detecting step (S30), the robot 100 or the terminal 300 may detect a point that aligns with the coordinate value R in the second coordinate information M2, or that is closest to the coordinate values R as the reference point C. For instance, when the coordinate values R are determined as illustrated in FIG. 10A, a vertex C at an upper left end of the driving region 1000 may be detected as the reference point C as illustrated in FIG. 10B.

The matching step (S40) may be aligning, by the robot 100 or the terminal 300, the first coordinate information M1 and the second coordinate information M2 based on the coordinate values R and the reference point C to match the first map data and the second map data.

In the matching step (S40), as illustrated in (a) of FIG. 11, the robot 100 or the terminal 300 may align the coordinate values R of the first coordinate information M1 with the reference point C of the second coordinate information M2, and overlap the first coordinate information M1 with the second coordinate information M2. Accordingly, as illustrated in (b) of FIG. 11, the coordinates of the first coordinate information M1 may be disposed on the second coordinate information M2.

In the matching step (S40), the robot 100 or the terminal 300 may match the coordinate values R and the reference point C, and then, adjust at least one of an angle and a ratio of the first coordinate information M1 based on the coordinate values R to match the first coordinate information M1 to the second coordinate information M2. For instance, after aligning the coordinate values R with the reference point C as illustrated in (b) of FIG. 11, at least one of an angle and a ratio of the first coordinate information M1 may be adjusted based on the coordinate values R such that the remaining coordinates of the first coordinate information M1 are exactly disposed on the second coordinate information M2 to align the first coordinate information with the second coordinate information.

In the matching step (S40), the robot 100 or the terminal 300 may rotate the first coordinate information M1 to allow errors D1 and D2 between the first coordinate information M1 and the second coordinate information M2 to be within a predetermined range while the coordinate values R are fixed to the reference point C, thereby adjusting the angle of the first coordinate information M1. That is, when the angle of the first coordinate information M1 is adjusted based on the coordinate values R, the first coordinate information M1 may be rotated based on the coordinate values R to adjust the angle of the first coordinate information M1 while the coordinate values R is aligned with the reference point C, thereby allowing the errors D1 and D2 between the first coordinate information M1 and the second coordinate information M2 to be within a predetermined range.

In the matching step (S40), the robot 100 or the terminal 300 may detect an actual distance between any two points on the driving region 1000, detect an estimated distance between coordinates corresponding to the two points, respectively, on the first coordinate information M1, and measure an adjustment reference based on the actual distance and the estimated distance, thereby reflecting the adjustment reference to the first coordinate information M1 to adjust a ratio of the first coordinate information M. When a ratio of the first coordinate information M1 is adjusted based on the coordinate values R, the adjustment reference measured based on the actual distance and the estimated distance may be reflected to a distance between coordinates on the first coordinate information M1 to adjust a distance ratio between the coordinates while the coordinate values R are aligned with the reference point C, thereby allowing the errors D1 and D2 between the first coordinate information M1 and the second coordinate information M2 to be within the predetermined range.

In the matching step (S40), when adjusting a ratio of the first coordinate information M1, the robot 100 or the terminal 300 may detect an actual distance between the reference point C and any one straight line point on a straight line to the reference point C, detect an estimated distance between the coordinate values R and adjacent values adjacent to the straight line point on the first coordinate information M1, and measure the adjustment reference based on the reference point C and the straight line point, thereby reflecting the adjustment reference to each distance between the coordinates of the first coordinate information M1. That is, when measuring the adjustment reference to reflect it to each distance between the coordinates of the first coordinate information M1, the adjustment reference may be measured based on an actual distance between the reference point C and the straight line point, and an estimated distance between the coordinate values R and the adjacent values, corresponding to the actual distance on the coordinate information M1, thereby allowing the adjustment reference measured from the reference point C and the straight line point to be commonly reflected to each distance between the coordinates of the first coordinate information M1.

In the matching step S40, when adjusting a ratio of the first coordinate information M1, the robot 100 or the terminal 300 may detect actual distances between a plurality of any two points, respectively, detect estimated distances between the coordinates corresponding to the plurality of any two points, respectively, and measure a plurality of adjustment references, respectively, based on a plurality of actual distances and a plurality of estimated distances, thereby reflecting the plurality of adjustment references to distances between the coordinates of the first coordinate information M1 corresponding thereto, respectively. That is, when measuring the adjustment reference to reflect it to each distance between the coordinates of the first coordinate information M1, as illustrated in FIG. 12, a plurality of adjustment references may be measured based on actual distances between the plurality of two points, respectively, and estimated distances corresponding to the plurality of two points, respectively, thereby reflecting the plurality of adjustment references measured from the plurality of two points, respectively, to distances between the coordinates of the first coordinate information M1, respectively.

In the matching step (S40), when adjusting a ratio of the first coordinate information M1, the robot 100 or the terminal 300 may detect actual distances between a plurality of any two points, respectively, detect estimated distances between coordinates corresponding to the plurality of any two points, respectively, and measure a plurality of adjustment references based on a plurality of actual distances and a plurality of estimated distances, respectively, thereby reflecting an average value of the plurality of adjustment references to each distance between the coordinates of the first coordinate information M1. That is, when measuring the adjustment reference to reflect it to each distance between the coordinates of the first coordinate information M1, as illustrated in FIG. 12, a plurality of adjustment references may be measured based on actual distances between the plurality of two points, respectively, and estimated distances corresponding to the plurality of two points, respectively, and calculate an average value of the plurality of adjustment references, thereby allowing the average value measured from each of the plurality of two points to be commonly reflected to each distance between the coordinates of the first coordinate information M1.

The generating step (S50) may be generating, by the robot 100 or the terminal 300, the boundary information according to the matching result.

In the generating step (S50), the robot 100 or the terminal 300 may allow the matching result to be output and displayed on an outside of the robot 100 or the terminal 300, and generate the boundary information in response to a manipulation on the output display. That is, when matching the first map data and the second map data to generate the boundary information from the matching result, the matching result may be displayed externally, thereby generating the boundary information in response to a manipulation of at least one of correction, modification, and setting on the output display, and setting the boundary region 1200 according to the boundary information. In this case, the output display may be carried out through the input unit 18 of the robot 100 or carried out through the terminal 300. As a specific example of generating the boundary information in response to a manipulation on the output display, when a matching result obtained by aligning the first coordinate information M1 with the second coordinate information M2 is output and displayed on an outside of the robot 100 or the control element (M), a setting manipulation L of the boundary region 1200 may be carried out on the output display M as illustrated in FIG. 13A. As described above, when the region setting manipulation L is carried out on the output display M, the boundary information may be generated in response to the region setting manipulation L. Furthermore, as illustrated in Fig. 13B, an island setting manipulation I may be carried out on the output display M. As described above, when the island setting manipulation I is carried out on the output display M, the boundary information may be generated in response to the island setting manipulation I. In addition, as illustrated in FIG. 13C, a placement setting manipulation of one or more apparatuses including the charging device 500 may be carried out on the output display M. As such, when the placement setting manipulation is carried out on the output display M, the boundary information may be generated in response to the placement setting manipulation. When a specific setting for the driving region 1000 is carried out in this process, the robot 100 may generate the boundary information by reflecting the setting result.

The generation method including the converting step (S10), the determining step (S20), the detecting step (S30), the matching step (S40) and the generating step (S50) may be implemented as codes readable by a computer on a medium written by the program. The computer readable medium includes all types of recording devices in which data readable by a computer system is stored. Examples of the computer-readable medium may include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). In addition, the computer may include the controller 20.

Examples of a mobile robot system and a method of generating boundary information of the mobile robot system as described above will be applied and implemented to a lawn mower robot, a control method of the lawn mower robot, a control element of the lawn mower robot, a lawn mower robot system, and a method of setting a boundary region of the lawn mower robot, a method of generating/acquiring boundary information of the lawn mower robot system, and the like. However, the technology disclosed in the present disclosure will not be limited thereto, and will be also applied and implemented to all mobile robots, control elements of controlling the mobile robot, mobile robot systems, methods of controlling the mobile robot, and the like, to which the technical concept of the technology is applicable.

### [Brief Description of Reference Numerals]

1: Mobile robot system 10: Main body
11: Driving unit 12: Communication unit
20: Controller 30: Weeding unit
100: Mobile robot 200: Transmitter
300: Terminal 400: GPS satellite
600: Communication target element (web server) 1000: Driving region
1200: Boundary region

## Claims

1. A mobile robot system comprising:
a plurality of transmitters (200) installed in a boundary region of a driving region (1000) and configured to transmit transmission signals;
a communication target element (600) configured to store map information of a region including the driving region (1000) to provide the map information to a communication target device; and
a mobile robot (100) configured to generate first map data for positions of the plurality of transmitters (200) based on a reception result of the transmission signals, and configured to receive second map data for a region corresponding to the driving region (1000) from the communication target element (600) to match the first map data and the second map data so as to generate boundary information of the driving region (1000),
wherein the map information is a commercial map provided on a web,
wherein the communication target element (600) is a web server in which control information related to the control of the mobile robot system is stored; and
wherein the communication target element (600) is configured to determine a current position of the mobile robot, and then to transmit area information corresponding to the current location from the map information to the mobile robot (100), and configured to receive designation information for a portion corresponding to the driving region (1000) on the area information to generate the second map data according to the designation information.

2. The mobile robot system of claim 1, wherein at least three of the plurality of transmitters (200) are dispersedly installed in the boundary region.

3. The mobile robot system of claim 1, wherein the mobile robot (100) is configured to convert the first map data and the second map data into first coordinate information and second coordinate information, respectively, in the same coordinate system, and to match the first map data and the second map data using the first coordinate information and the second coordinate information.

4. The mobile robot system of claim 3, wherein the mobile robot (100) is configured to determine coordinate values corresponding to a position of any one transmitter in the first coordinate information, and configured to detect a reference point that matches the coordinate values in the second coordinate information to align the first coordinate information and the second coordinate information based on the coordinate values and the reference point so as to match the first map data and the second map data.

5. The mobile robot system of claim 4, wherein the mobile robot (100) is configured to align the coordinate values with the reference point, and then to adjust at least one of an angle and a ratio of the first coordinate information based on the coordinate values to align the first coordinate information with the second coordinate information.

6. The mobile robot system of claim 5, wherein the mobile robot (100) is configured to rotate the first coordinate information to allow an error between the first coordinate information and the second coordinate information to be within a predetermined range while the coordinate values are fixed to the reference point so as to adjust the angle of the first coordinate information.

7. The mobile robot system of claim 5, wherein the mobile robot (100) is configured to detect an actual distance between any two points on the driving region (1000), to detect an estimated distance between coordinates corresponding to the two points, respectively, on the first coordinate information, and to measure an adjustment reference based on the actual distance and the estimated distance to reflect the adjustment reference to the first coordinate information so as to adjust a ratio of the first coordinate information.

8. The mobile robot system of claim 7, wherein the mobile robot (100) is configured to detect an actual distance between the reference point and any one straight line point on a straight line to the reference point, to detect an estimated distance between the coordinate values and adjacent values adjacent to the straight line point on the first coordinate information, and to measure the adjustment reference based on the reference point and the straight line point so as to reflect the adjustment reference to each distance between the coordinates of the first coordinate information.

9. The mobile robot system of claim 7, wherein the mobile robot (100) is configured to detect actual distances between a plurality of any two points, respectively, to detect estimated distances between coordinates corresponding to the plurality of any two points, respectively, and to measure a plurality of adjustment references based on a plurality of actual distances and a plurality of estimated distances, respectively, so as to reflect the plurality of adjustment references to distances between the coordinates of the first coordinate information, respectively.

10. The mobile robot system of claim 7, wherein the mobile robot (100) is configured to detect actual distances between a plurality of any two points, respectively, to detect estimated distances between coordinates corresponding to the plurality of any two points, respectively, and to measure a plurality of adjustment references based on a plurality of actual distances and a plurality of estimated distances, respectively, so as to reflect an average value of the plurality of adjustment references to each distance between the coordinates of the first coordinate information.

11. The mobile robot system of claim 1, wherein the mobile robot (100) is configured to allow a matching result to be output and displayed on an outside of the mobile robot or on a control element that controls the mobile robot, and configured to generate the boundary information in response to a manipulation on the output display.

12. The mobile robot system of claim 1, wherein the mobile robot (100) is configured to store image data for each process in which the generation of the boundary information is carried out by matching the first map data and the second map data.

13. A method of generating boundary information in a mobile robot system that comprises:
a plurality of transmitters (100) installed in a boundary region of a driving region (1000) to transmit transmission signals;
a communication target element (600) that stores map information of a region including the driving region to provide the map information to a communication target device; and
a mobile robot (100) that generates first map data for positions of the plurality of transmitters (200) based on a reception result of the transmission signals, receives second map data for a region corresponding to the driving region from the communication target element to generate boundary information of the driving region (1000) based on the first map data and the second map data, the method comprising:
converting the first map data and the second map data into first coordinate information and second coordinate information, respectively;
determining coordinate values corresponding to a position of any one transmitter in the first coordinate information;
detecting a reference point that aligns with the coordinate values in the second coordinate information;
aligning the first map data and the second map data based on the coordinate values and the reference point to match the first coordinate information and the second coordinate information; and
generating boundary information of the driving region (1000) according to the matching result,
wherein the map information is a commercial map provided on a web,
wherein the communication target element (600) is a web server in which control information related to the control of the mobile robot system is stored; and
wherein the communication target element determines a current position of the mobile robot, and then transmits area information corresponding to the current location from the map information to the mobile robot, and receives designation information for a portion corresponding to the driving region on the area information to generate the second map data according to the designation information.

## Patentansprüche

1. Mobiles Robotersystem, das aufweist:
mehrere Übertragungseinrichtungen (200), die in einem Grenzbereich eines Fahrbereichs (1000) installiert sind und konfiguriert sind, Übertragungssignale zu übertragen;
ein Kommunikationszielelement (600), das konfiguriert ist, Karteninformationen eines Bereichs, der den Fahrbereich (1000) aufweist, zu speichern, um die Karteninformationen einer Kommunikationszielvorrichtung bereitzustellen; und
einen mobilen Roboter (100), der konfiguriert ist, erste Kartendaten für Positionen der mehreren Übertragungseinrichtungen (200) auf der Grundlage eines Empfangsergebnisses der Übertragungssignale zu erzeugen, und konfiguriert ist, zweite Kartendaten für einen Bereich, der dem Fahrbereich (1000) entspricht, von dem Kommunikationszielelement (600) zu empfangen, um die ersten Kartendaten und die zweiten Kartendaten so abzugleichen, dass Grenzinformationen des Fahrbereichs (1000) erzeugt werden,
wobei die Karteninformationen eine auf einem Webspeicherort bereitgestellte kommerzielle Karte sind,
wobei das Kommunikationszielelement (600) ein Webserver ist, auf dem Steuerinformationen bezüglich der Steuerung des mobilen Robotersystems gespeichert sind; und
wobei das Kommunikationszielelement (600) konfiguriert ist, eine aktuelle Position des mobilen Roboters zu bestimmen und dann Gebietsinformationen, die dem aktuellen Standort entsprechen, aus den Karteninformationen an den mobilen Roboter (100) zu übertragen, und konfiguriert ist, Bezeichnungsinformationen für einen Teil, der dem Fahrbereich (1000) entspricht, auf den Gebietsinformationen zu empfangen, um die zweiten Kartendaten gemäß den Bezeichnungsinformationen zu erzeugen.

2. Mobiles Robotersystem nach Anspruch 1, wobei mindestens drei der mehreren Übertragungseinrichtungen (200) in dem Grenzbereich verteilt installiert sind.

3. Mobiles Robotersystem nach Anspruch 1, wobei der mobile Roboter (100) konfiguriert ist, die ersten Kartendaten und die zweiten Kartendaten in jeweils erste Koordinateninformationen und zweite Koordinateninformationen in demselben Koordinatensystem umzuwandeln und die ersten Kartendaten und die zweiten Kartendaten unter Verwendung der ersten Koordinateninformationen und der zweiten Koordinateninformationen abzugleichen.

4. Mobiles Robotersystem nach Anspruch 3, wobei der mobile Roboter (100) konfiguriert ist, Koordinatenwerte zu bestimmen, die einer Position einer beliebigen Übertragungseinrichtung in den ersten Koordinateninformationen entsprechen, und konfiguriert ist, einen Referenzpunkt zu erfassen, der mit den Koordinatenwerten in den zweiten Koordinateninformationen übereinstimmt, um die ersten Koordinateninformationen und die zweiten Koordinateninformationen auf der Grundlage der Koordinatenwerte und des Referenzpunkts so auszurichten, dass die ersten Kartendaten und die zweiten Kartendaten übereinstimmen.

5. Mobiles Robotersystem nach Anspruch 4, wobei der mobile Roboter (100) konfiguriert ist, die Koordinatenwerte am Referenzpunkt auszurichten und dann mindestens eines von einem Winkel und einem Verhältnis der ersten Koordinateninformationen auf der Grundlage der Koordinatenwerte anzupassen, um die ersten Koordinateninformationen mit den zweiten Koordinateninformationen auszurichten.

6. Mobiles Robotersystem nach Anspruch 5, wobei der mobile Roboter (100) konfiguriert ist, die ersten Koordinateninformationen zu drehen, um einen Fehler zwischen den ersten Koordinateninformationen und den zweiten Koordinateninformationen innerhalb eines vorbestimmten Bereichs zu halten, während die Koordinatenwerte auf den Referenzpunkt fixiert sind, um so den Winkel der ersten Koordinateninformationen anzupassen.

7. Mobiles Robotersystem nach Anspruch 5, wobei der mobile Roboter (100) konfiguriert ist, einen tatsächlichen Abstand zwischen zwei beliebigen Punkten im Fahrbereich (1000) zu erfassen, einen geschätzten Abstand zwischen Koordinaten, die den beiden Punkten entsprechen, jeweils auf den ersten Koordinateninformationen zu erfassen und eine Anpassungsreferenz auf der Grundlage des tatsächlichen Abstands und des geschätzten Abstands zu messen, um die Anpassungsreferenz für die ersten Koordinateninformationen widerzuspiegeln, um so ein Verhältnis der ersten Koordinateninformationen anzupassen.

8. Mobiles Robotersystem nach Anspruch 7, wobei der mobile Roboter (100) konfiguriert ist, einen tatsächlichen Abstand zwischen dem Referenzpunkt und einem beliebigen Punkt auf einer geraden Linie auf einer geraden Linie zum Referenzpunkt zu erfassen, einen geschätzten Abstand zwischen den Koordinatenwerten und benachbarten Werten, die am Punkt auf der geraden Linie angrenzen, in den ersten Koordinateninformationen zu erfassen, und die Anpassungsreferenz auf der Grundlage des Referenzpunkts und des Punkts auf der geraden Linie zu messen, um so die Anpassungsreferenz für jeden Abstand zwischen den Koordinaten der ersten Koordinateninformationen widerzuspiegeln.

9. Mobiles Robotersystem nach Anspruch 7, wobei der mobile Roboter (100) konfiguriert ist, jeweils tatsächliche Abstände zwischen mehreren von zwei beliebigen Punkten zu erfassen, um jeweils geschätzte Abstände zwischen Koordinaten zu erfassen, die den mehreren von zwei beliebigen Punkten entsprechen, und jeweils mehrere Anpassungsreferenzen auf der Grundlage mehrerer tatsächlicher Abstände und mehrerer geschätzter Abstände zu messen, um so jeweils die mehreren Anpassungsreferenzen für Abstände zwischen den Koordinaten der ersten Koordinateninformationen widerzuspiegeln.

10. Mobiles Robotersystem nach Anspruch 7, wobei der mobile Roboter (100) konfiguriert ist, jeweils die tatsächlichen Abstände zwischen mehreren von zwei beliebigen Punkten zu erfassen, um jeweils die geschätzten Abstände zwischen den Koordinaten zu ermitteln, die den mehreren von zwei beliebigen Punkten entsprechen, und um jeweils mehrere Anpassungsreferenzen auf der Grundlage mehrerer tatsächlicher Abstände und mehrerer geschätzter Abstände zu messen, um so einen Durchschnittswert der mehreren Anpassungsreferenzen für jeden Abstand zwischen den Koordinaten der ersten Koordinateninformationen widerzuspiegeln.

11. Mobiles Robotersystem nach Anspruch 1, wobei der mobile Roboter (100) konfiguriert ist zu ermöglichen, ein Abgleichergebnis ausgegeben und an einer Außenseite des mobilen Roboters oder auf einem Steuerelement, das den mobilen Roboter steuert, anzuzeigen, und konfiguriert ist, die Grenzinformationen als Reaktion auf eine Bearbeitung der Anzeige der Ausgabe zu erzeugen.

12. Mobiles Robotersystem nach Anspruch 1, wobei der mobile Roboter (100) konfiguriert ist, Bilddaten für jeden Prozess zu speichern, in dem die Erzeugung der Grenzinformationen durch Abgleichen der ersten Kartendaten und der zweiten Kartendaten durchgeführt wird.

13. Verfahren zum Erzeugen von Grenzinformationen in einem mobilen Robotersystem, das aufweist:
mehrere Übertragungseinrichtungen (100), die in einem Grenzbereich eines Fahrbereichs (1000) installiert sind, um Übertragungssignale zu übertragen;
ein Kommunikationszielelement (600), das Karteninformationen eines Bereichs einschließlich des Fahrbereichs speichert, um die Karteninformationen einer Kommunikationszielvorrichtung bereitzustellen; und
einen mobilen Roboter (100), der erste Kartendaten für Positionen der mehreren Übertragungseinrichtungen (200) auf der Grundlage eines Empfangsergebnisses der Übertragungssignale erzeugt, zweite Kartendaten für einen Bereich, der dem Fahrbereich entspricht, von dem Kommunikationszielelement empfängt, um auf der Grundlage der ersten Kartendaten und der zweiten Kartendaten Grenzinformationen des Fahrbereichs (1000) zu erzeugen, wobei das Verfahren aufweist:
Umwandeln der ersten Kartendaten und der zweiten Kartendaten in jeweils erste Koordinateninformationen und zweite Koordinateninformationen;
Bestimmen von Koordinatenwerten, die einer Position einer beliebigen Übertragungseinrichtung in den ersten Koordinateninformationen entsprechen;
Erfassen eines Referenzpunkts, der mit den Koordinatenwerten in den zweiten Koordinateninformationen ausgerichtet ist;
Ausrichten der ersten Kartendaten und der zweiten Kartendaten auf der Grundlage der Koordinatenwerte und des Referenzpunkts, um die ersten Koordinateninformationen und die zweiten Koordinateninformationen abzugleichen; und
Erzeugen von Grenzinformationen des Fahrbereichs (1000) gemäß dem Abgleichungsergebnis,
wobei die Karteninformationen eine auf einem Webspeicherort bereitgestellte kommerzielle Karte sind,
wobei das Kommunikationszielelement (600) ein Webserver ist, auf dem Steuerinformationen bezüglich der Steuerung des mobilen Robotersystems gespeichert sind; und
wobei das Kommunikationszielelement eine aktuelle Position des mobilen Roboters bestimmt und dann Gebietsinformationen, die der aktuellen Position entsprechen, aus den Karteninformationen an den mobilen Roboter überträgt und Bezeichnungsinformationen für einen Teil, der dem Fahrbereich auf den Gebietsinformationen entspricht, empfängt, um die zweiten Kartendaten gemäß den Bezeichnungsinformationen zu erzeugen.

## Revendications

1. Système de robot mobile comprenant :
une pluralité de transmetteurs (200) installés dans une région de délimitation d'une région de pilotage (1000) et configurés pour transmettre des signaux de transmission ;
un élément cible de communication (600) configuré pour stocker des informations cartographiques d'une région incluant la région de pilotage (1000) pour fournir les informations cartographiques à un dispositif cible de communication ; et
un robot mobile (100) configuré pour générer des premières données cartographiques pour des positions de la pluralité de transmetteurs (200) sur la base d'un résultat de réception des signaux de transmission, et configuré pour recevoir des secondes données cartographiques pour une région correspondant à la région de pilotage (1000) depuis l'élément cible de communication (600) pour faire correspondre les premières données cartographiques et les secondes données cartographiques afin de générer des informations de délimitation de la région de pilotage (1000),
dans lequel les informations cartographiques sont une carte commerciale fournie sur un web,
dans lequel l'élément cible de communication (600) est un serveur web dans lequel sont stockées des informations de commande en lien avec la commande du système de robot mobile ; et
dans lequel l'élément cible de communication (600) est configuré pour déterminer une position actuelle du robot mobile, et puis pour transmettre au robot mobile (100) des informations de zone correspondant à un emplacement actuel provenant des informations cartographiques, et est configuré pour recevoir des informations de désignation pour une portion correspondant à la région de pilotage (1000) sur les informations de zone pour générer les secondes données cartographiques en accord avec les informations de désignation.

2. Système de robot mobile selon la revendication 1, dans lequel trois au moins de la pluralité de transmetteurs (200) sont installés de manière dispersée dans la région de délimitation.

3. Système de robot mobile selon la revendication 1, dans lequel le robot mobile (100) est configuré pour convertir les premières données cartographiques et les secondes données cartographiques en premières informations de coordonnées et en secondes informations de coordonnées, respectivement, dans le même système de coordonnées, et pour faire correspondre les premières données cartographiques et les secondes données cartographiques en utilisant les premières informations de coordonnées et les secondes informations de coordonnées.

4. Système de robot mobile selon la revendication 3, dans lequel le robot mobile (100) est configuré pour déterminer des valeurs de coordonnées correspondant à une position d'un transmetteur quelconque dans les premières informations de coordonnées, et est configuré pour détecter un point de référence qui correspond aux valeurs de coordonnées dans les secondes informations de coordonnées pour aligner les premières informations de coordonnées et les secondes informations de coordonnées sur la base des valeurs de coordonnées et du point de référence de manière à faire correspondre les premières données cartographiques et les secondes données cartographiques.

5. Système de robot mobile selon la revendication 4, dans lequel le robot mobile (100) est configuré pour aligner les valeurs de coordonnées avec le point de référence, et ensuite pour ajuster l'un au moins d'un angle et d'un ratio des premières informations de coordonnées sur la base des valeurs de coordonnées pour aligner les premières informations de coordonnées avec les secondes informations de coordonnées.

6. Système de robot mobile selon la revendication 5, dans lequel le robot mobile (100) est configuré pour faire tourner les premières informations de coordonnées pour permettre une erreur entre les premières informations de coordonnées et les secondes informations de coordonnées pour être à l'intérieur d'une plage prédéterminée tandis que les valeurs de coordonnées sont fixées sur le point de référence de manière à ajuster l'angle des premières informations de coordonnées.

7. Système de robot mobile selon la revendication 5, dans lequel le robot mobile (100) est configuré pour détecter une distance réelle entre deux points quelconques sur la région de pilotage (1000), pour détecter une distance estimée entre des coordonnées correspondant aux deux points, respectivement, sur les premières informations de coordonnées, et pour mesurer une référence d'ajustement sur la base de la distance réelle et de la distance estimée pour refléter la référence d'ajustement sur les premières informations de coordonnées de manière à ajuster un ratio des premières informations de coordonnées.

8. Système de robot mobile selon la revendication 7, dans lequel le robot mobile (100) est configuré pour détecter une distance réelle entre le point de référence et un point de ligne droite quelconque sur une ligne droite jusqu'au point de référence, pour détecter une différence estimée entre des valeurs de coordonnées et des valeurs adjacentes qui sont adjacentes au point de ligne droite sur les premières informations de coordonnées, et pour mesurer la référence d'ajustement sur la base du point de référence et du point de ligne droite de manière à refléter la référence d'ajustement sur chaque distance entre les coordonnées des premières informations de coordonnées.

9. Système de robot mobile selon la revendication 7, dans lequel le robot mobile (100) est configuré pour détecter des distances réelles entre une pluralité de deux points quelconques, respectivement, pour détecter des distances estimées entre des coordonnées correspondant à la pluralité de deux points quelconques, respectivement, et pour mesurer une pluralité de références d'ajustement sur la base d'une pluralité de distances réelles et d'une pluralité de distances estimées, respectivement, de manière à refléter la pluralité de références d'ajustement sur des distances entre les coordonnées des premières informations de coordonnées, respectivement.

10. Système de robot mobile selon la revendication 7, dans lequel le robot mobile (100) est configuré pour détecter des distances réelles entre une pluralité de deux points quelconques, respectivement, pour détecter des distances estimées entre des coordonnées correspondant à la pluralité de deux points quelconques, respectivement, et pour mesurer une pluralité de références d'ajustement sur la base d'une pluralité de distances réelles et d'une pluralité de distances estimées, respectivement, de manière à refléter une valeur moyenne de la pluralité de références d'ajustement sur chaque distance entre les coordonnées des premières informations de coordonnées.

11. Système de robot selon la revendication 1, dans lequel le robot mobile (100) est configuré pour permettre une sortie et un affichage du résultat de correspondance sur une partie extérieur du robot mobile ou sur un élément de commande qui commande le robot mobile, et est configuré pour générer les informations de délimitation en réponse à une manipulation sur l'affichage de sortie.

12. Système de robot mobile selon la revendication 1, dans lequel le robot mobile (100) est configuré pour stocker des données d'image pour chaque processus dans lequel la génération des informations de délimitation est exécutée en faisant correspondre les premières données cartographiques et les secondes données cartographiques.

13. Procédé consistant à générer des informations de délimitation dans un système de robot mobile qui comprend :
une pluralité de transmetteurs (100) installés dans une région de délimitation d'une région de pilotage (1000) pour transmettre des signaux de transmission ;
un élément cible de communication (600) qui stocke des informations cartographiques d'une région incluant la région de pilotage pour fournir les informations cartographiques à un dispositif cible de communication ; et
un robot mobile (100) qui génère des premières données cartographiques pour des positions de la pluralité de transmetteurs (200) sur la base d'un résultat de réception des signaux de transmission, reçoit des secondes informations cartographiques pour une région correspondant à la région de pilotage depuis l'élément cible de communication pour générer des informations de délimitation de la région de pilotage (1000) sur la base des premières informations cartographiques et des secondes informations cartographiques, le procédé comprenant les étapes consistant à :
convertir les premières données cartographiques et les secondes données cartographiques en premières informations de coordonnées et en secondes informations de coordonnées, respectivement ;
déterminer des valeurs de coordonnées correspondant à une position d'un transmetteur quelconque dans les premières informations de coordonnées ;
détecter un point de référence qui est aligné avec les valeurs de coordonnées dans les secondes informations de coordonnées ;
aligner les premières données cartographiques et les secondes données cartographiques sur la base des valeurs de coordonnées et du point de référence pour faire correspondre les premières informations de coordonnées et les secondes informations de coordonnées ; et
générer des informations de délimitation de la région de pilotage (1000) en accord avec le résultat de correspondance,
dans lequel les informations cartographiques sont une carte commerciale fournie sur un web,
dans lequel l'élément cible de communication (600) est un serveur web dans lequel sont stockées des informations de commande en lien avec la commande du système de robot mobile ; et
dans lequel l'élément cible de communication détermine une position actuelle du robot mobile, et puis transmet des informations de zone correspondant à l'emplacement actuel provenant des informations cartographiques du robot mobile, et reçoit des informations de désignation pour une portion correspondant à la région de pilotage sur les informations de zone pour générer les secondes données cartographiques en accord avec les informations de désignation.
